# EUROPEAN PATENT SPECIFICATION

(11) **EP 2 674 266 B1**
(45) Date of publication and mention of the grant of the patent: **22.04.2015**
(21) Application number: 13171367.9
(22) Date of filing: 11.06.2013
(51) Int. Cl.: B26B 11/00, H02G 1/12

(54) **Manual cable stripping tool**
Manuelles Kabelentmantelungswerkzeug
Outil manuel de dénudage de câbles

(30) Priority: 14.06.2012 FR 1201703
(43) Date of publication of application: 18.12.2013
(73) Proprietor: Stanley Works (Europe) GmbH, 8600 Dübendorf (CH)
(72) Inventor: Chan, Yi Tung, 422 TAICHUNG (TW); Bignon-Zillhardt, Julian, 91170 Viry Châtillon (FR); Lee, Chihchiang, 40354 Taichung (TW)
(74) Representative: Kavanagh, Benjamin

(56) References cited:
- DE-C1- 4 204 141
- DE-U1-202006 012 362
- FR-A1- 2 818 040
- US-A- 3 722 092

## Description

The present invention relates to a manual cable stripping tool, the tool being of the type comprising an elongated body which extends along a longitudinal axis X-X and is provided with a recess delimiting a cable support head; a knife holder which is received in a sliding manner in relation to the body substantially along the longitudinal axis X-X and the free end of which is arranged in the recess, facing the support head; a cable sheath incision knife which is supported by the knife holder and the cutting portion of which is capable of extending beyond the free end of the knife holder; a biasing means which acts on the knife holder to displace it towards the support head; a gripping means which is rigidly connected to the knife holder for manoeuvring it; the knife holder being movable between an advanced position in which the incision knife is moved closer to the support head under the action of the biasing means and a retracted position in which the incision knife is moved away from the support head against the action of the biasing means.

In the field of industrial maintenance it is usual to act on cables covered with a sheath, in order to eliminate a portion of this sheath by a stripping operation. For this purpose, the operator manually positions the cable to be stripped between the support head of the tool and the incision knife, a spring being adapted to move the knife closer to the support and to clamp and secure the cable between these two members. The operator then acts on the tool with a rotary movement in relation to the cable and/or a translatory movement in relation to the axis of the cable in order to cut the sheath. The operator then removes the cut sheath manually.

It is known from US-A-5 829 141 to use a tool to cut the outer layer of insulation from an elongated cable. The tool comprises a body rigidly connected to a cable support. A knife holder is mounted such that it can slide in relation to the body and supports an incision knife. A spring biases the knife holder towards the cable support. The knife holder is provided with a handle for displacing the knife holder and controlling its movements. The handle is dimensioned to be actuated by the index finger of the operator. However, the device does not facilitate rapid placement of the cable in the support.

DE 893 672 discloses a device for stripping a cable, comprising a hollow body in which a compression spring is accommodated, which spring acts on a knife holder which can slide axially in relation to the body. The knife holder comprises an incision knife adapted to cut the sheath of a cable which is secured by a clamp which is rigidly connected to the body. The longitudinal positioning of the clamp in relation to the body can be adjusted by means of a screw arranged in a channel and securing in the chosen position is achieved by means of a butterfly screw. However, placement of the cable between the knife and the clamp requires a plurality of actions by the operator, namely unscrewing the butterfly screw, opening the passage between the knife and the clamp, engaging the cable, closing this passage, compressing the cable between the knife and the clamp against the spring and re-screwing the butterfly screw while maintaining the pressure. These operations take a long time to implement.

The pre-characterising features of claim 1 are known from FR 1828040 A1. A cable stripping tool is also known from DE 42 04 141. According to one aspect, an object of the invention is to improve the design of the stripping tool by improving the placement of the cable in the support.

To this end, the invention relates to a tool of the above-mentioned type, the gripping means of which is arranged adjacent to the free end of the knife holder and comprises a bearing face adapted to receive the cable to be engaged in the support head and is rigidly connected to the knife holder for manoeuvring it.

The invention thus ensures rapid placement of the cable in the cable support, the tool also being ergonomic and simple to produce.

According to other features:
- the bearing face is oriented in relation to the longitudinal axis X-X such that a force F applied to the cable in a direction substantially transverse to the sliding direction of the knife holder acts on the knife holder with an axial force component F1x capable of displacing the knife holder from its advanced position towards its retracted position against the action R of the biasing means;
- the gripping means is arranged so as to project laterally, at least in part, from the support head, and in that the bearing face is inclined in relation to the longitudinal axis X-X of the body, laterally from the end of the knife holder towards the end of the body opposite the head, moving away from the longitudinal axis X-X;
- the inclination is between 45° and 90°, preferably 65°;
- the bearing face of the cable comprises a concave region for receiving the cable.

According to another aspect, an object of the present disclosure is to improve the safety during an operation for stripping an electrical conductor. This problem is solved by the fact that, in a tool of the type indicated above, the tool comprises a retractable cutting blade, pivotally articulated to the casing of the body at the opposite end from the support head, the blade being movable between a rest position in which it is closed, retracted inside the body, and a working position in which it is open, completely extended from the body, and in that the casing of the body further comprises a channel which is transverse in relation to the axis X-X and intended to receive an electrical conductor, the cutting portion of the blade interfering in the profile of the channel in order to strip the conductor when the blade is in a virtually closed position.

The tool thus prevents risks of cutting the user and allows rapid circumferential cutting of the conductor, the tool also being ergonomic and simple to produce.

According to other features,
- a member for opening the blade prevents the knife holder from sliding from the advanced position towards the retracted position when the blade is extracted at least in part from the body.

According to another aspect, an object of the present disclosure is to make it easier to change the knife of the tool of the above-mentioned type. This problem is solved by the fact that, in a manual cable stripping tool of the above-mentioned type, the knife holder further receives a socket supporting the incision knife, and a clip arranged so as to be movable inside the socket, and in that the clip is provided with a locking/unlocking opening intended to interact with a groove of the end of the knife opposite the cutting portion of the knife.

The knife is thus kept locked in relation to the socket by means of a releasably securable clip which acts on the end of the knife opposite the cutting portion thereof.

More particularly, it is provided that
- the knife holder receives the socket in a sliding manner substantially along the longitudinal axis X-X;
- the knife holder receives a knob such that said knob can rotate relative to the knife holder, which knob is provided with an internal tapping which acts on an external thread of the socket in order to displace it in a sliding manner.

The invention and the advantages thereof will be better understood upon reading the following description which is given merely by way of example and with reference to the appended drawings, in which:
- Fig. 1 is a perspective view of a tool according to the invention,
- Fig. 2 is an exploded perspective view of the tool from Fig. 1,
- Fig. 3 and 4 are longitudinal sectional views of the tool from Fig. 1, respectively showing the tool provided with an auxiliary cutting blade in a retracted and an extended position according to the invention,
- Fig. 5a to 5c are longitudinal sectional views of the tool from Fig. 1, showing the operation of the tool according to the invention and the placement of a cable,
- Fig. 6 is an exploded perspective view of the incision knife sub-assembly of the tool from Fig. 2,
- Fig. 7a is a plan view of the clip of the knife sub-assembly from Fig. 6 with partial cut-away and in the direction of the arrow VII in Fig. 6,
- Fig. 7b is a sectional view of the clip from Fig. 7a along the line B-B,
- Fig. 8a is a sectional view in the direction of the arrows VIII in Fig. 3, showing the knife of the sub-assembly from Fig. 6 in the locked state,
- Fig. 8b is a partial sectional view similar to Fig. 8a, showing the knife of the sub-assembly from Fig. 6 in the unlocked state,
- Fig. 8c is a partial perspective view along the line C-C in Fig. 8b, showing the lower recess of the socket of the sub-assembly from Fig. 6,
- Fig. 9 is a plan view with partial cut-away of the tool from Fig. 1, showing the operation for stripping an electrical conductor using the auxiliary cutting blade,
- Fig. 10 is a plan view with partial cut-away on an enlarged scale, showing a detail from Fig. 9,
- Fig. 11 is a partial view from below of the tool from Fig. 9.

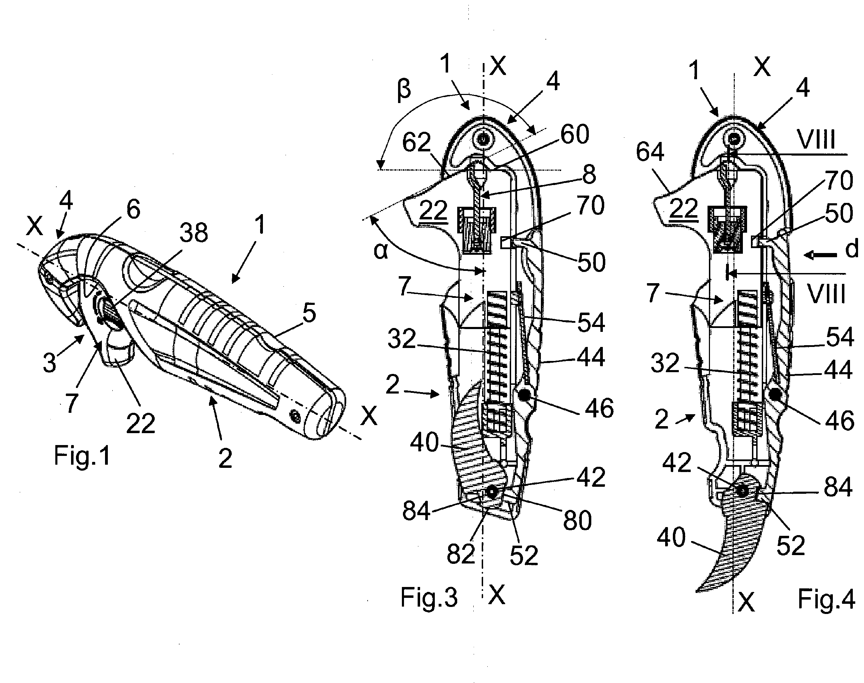

The terms "lower", "upper", "right" and "left", "top" and "bottom" used in the following description are understood according to the orientation of Fig. 3 to 5c.

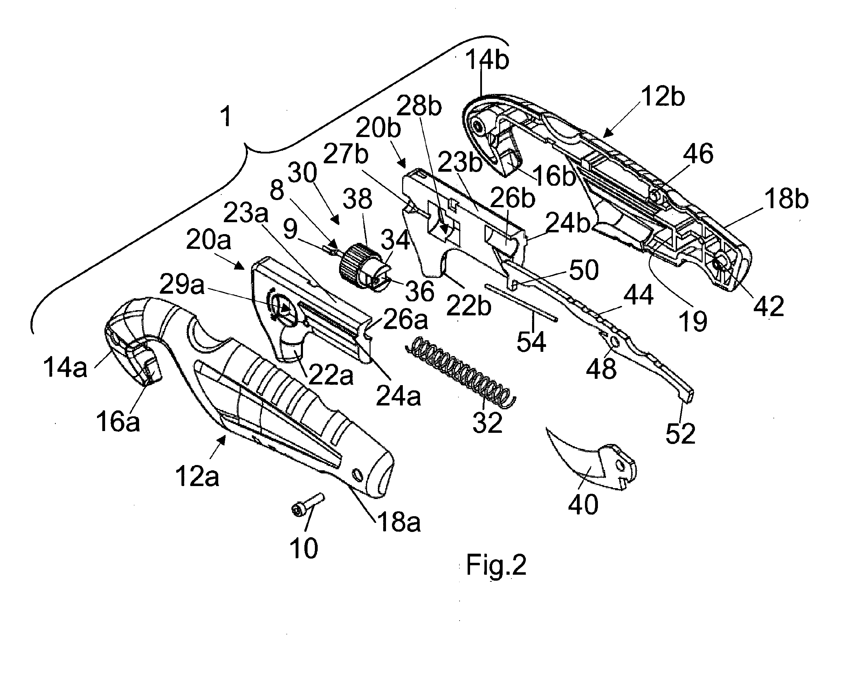

Fig. 1 and 2 show a particularly ergonomic and compact manual cable stripping tool. "Cable stripping tool" is understood to mean a cutting tool for stripping or unsheathing, that is to say removing the insulating covering, of a conductor, in particular of an electric cable.

The tool 1 comprises an elongated body 2 which extends along a longitudinal axis X-X and is provided with a recess 3 delimiting a support head 4 connected to a casing 5 forming a handle. A connecting portion 6 forms a constriction between the head 4 and the handle 5. A knife holder 7, on which a cable sheath incision knife 8 (Fig. 2) is mounted, is received in a sliding manner in the body 2 along the axis X-X. The head 4 and the knife holder 7 are thus in movement relative to one another. The cutting end 9 (Fig. 2) of the knife 8 is S-shaped.

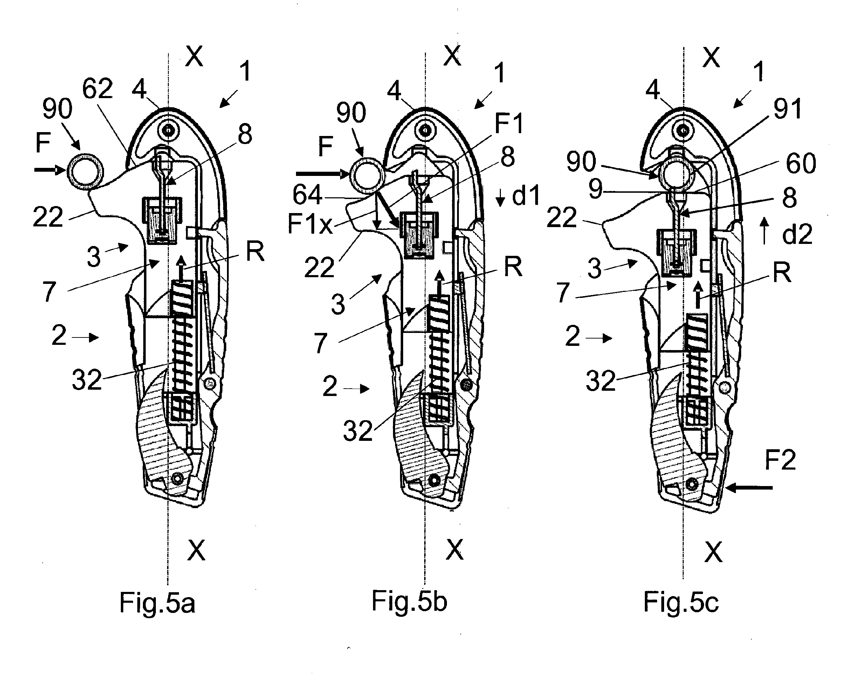

The body 2 is in the form of two shells 12a and 12b which are assembled by a screw 10. The shells are advantageously obtained by moulding a plastics material, respectively in one piece, which has the advantage of reducing the costs of production. Hook-shaped portions 14a and 14b form the support head 4 once they are assembled. The portions 14a and 14b respectively have a V-shaped inner form 16a and 16b which is capable of receiving a cable 90 (Fig. 5a to 5c). The portions 18a and 18b of the shells 12a and 12b opposite the hooks 14a and 14b form, once the shells are assembled, the gripping handle 5 of the tool. The gripping portion 18b comprises on the internal face a stop 19, the function of which will be described below.

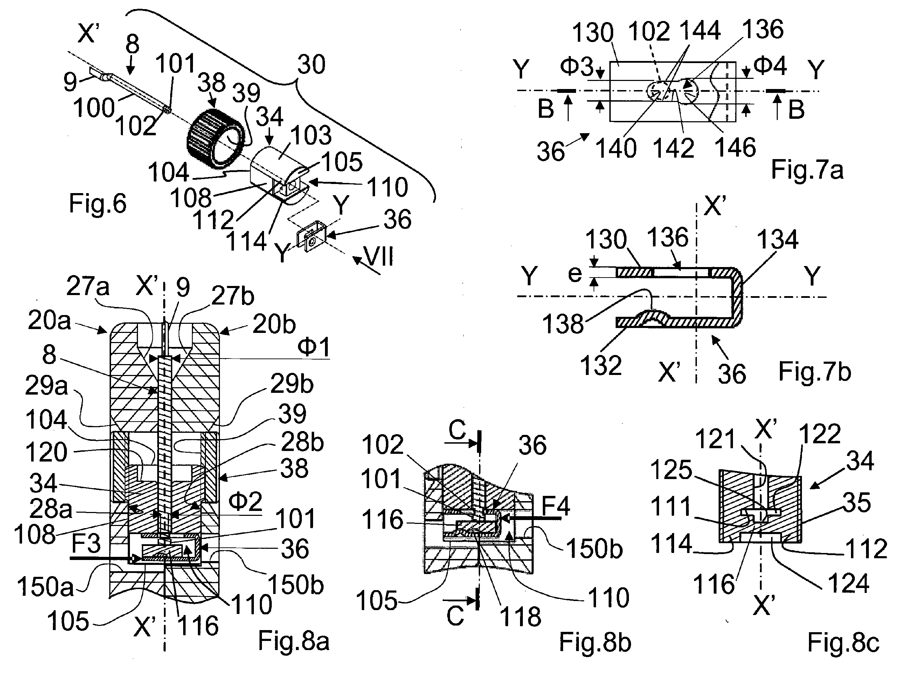

The knife holder 7 of the tool is in the form of two other, L-shaped shells 20a and 20b which are assembled by appropriate means. They respectively comprise a lateral branch 22a and 22b, forming a projection 22 once the shells are assembled, and a longitudinal branch 23a and 23b, provided with an external rib 24a and 24b for sliding guidance along the axis X-X of a semi-circular inner housing 26a and 26b. The shells 20a and 20b respectively comprise an inner cavity 27a (Fig. 8a) and 27b (Fig. 2 and 8a) in the shape of a half-funnel. The inner cavities are intended to receive the cutting portion 9 of the knife 8 in a rotatable manner. An inner recess 28a (Fig. 8a) and 28b (Fig. 2 and 8a) respectively extend each of the inner cavities 27a and 27b. The inner recesses 28a and 28b respectively open externally into an opening 29a (Fig. 2 and 8a) and 29b (Fig. 8a). When the shells 20a and 20b are assembled, the inner recesses are adapted to receive, by way of complementary shapes, an incision sub-assembly 30 comprising the knife 8.

A biasing means 32 of high rigidity, in the form of a helical compression spring, moves the knife holder 7 towards and clamps it in relation to the support head 4. For this purpose, the spring 32 rests on one hand on the base of the housings 26a and 26b of the knife holder 7 and on the other hand on the internal stop of the shell 12b of the body 2. The knife holder 7 is thus continuously biased towards the support head 4.

The incision sub-assembly 30 basically comprises a socket 34 which is provided with an external thread 35 (Fig. 8c) and supports the knife 8. A clip 36 releasably secures the knife 8 in relation to the socket 34. A knob 38 for adjusting the knife 8 comprises an internal tapping 39 (Fig. 6 and 8c) capable of interacting with the external thread 35 of the socket 34. Once the sub-assembly 30 has been arranged in the recesses 28a and 28b of the assembled shells 20a and 20b, the knob 38 is movable only in rotation in relation to an axis of rotation parallel to the axis X-X. The knob 38 is arranged in the openings 29a and 29b (Fig. 8a) of the knife holder 7 and is thus accessible manually from outside the knife holder 7. A screwing or unscrewing action on the knob 38 causes the axial sliding of the socket 34. Consequently, the height of the cutting portion 9 of the knife 8 which is extracted from the knife holder 7 can easily be adjusted by an external action on the knob 38.

The tool also comprises at least one auxiliary cutting blade 40, pivotally articulated to a pin 42 rigidly connected to the body 2 at the opposite end from the support head 4, and a member 44 for opening the blade 40, articulated to another pin 46 rigidly connected to the body 2. The auxiliary blade 40 is used for cutting work more commonly performed by the user.

The blade 40 is movable in a retractable manner between a rest position in which it is closed, retracted inside the body 2 (Fig. 3 and 5a to 5c) and a working position in which it is open, completely extended from the body 2 substantially in the longitudinal axis X-X (Fig. 4).

The main portion of the member 44 comprises a bore 48 capable of receiving the pin 46. The ends of the member 44 respectively comprise a first hook 50 and a second hook 52, the functions of which will be described below. A spring leaf 54 connected to the body 2 and to the member 44 resiliently biases the member 44.

In Fig. 3, 4 and 5a to 5c, the tool 1 is shown with the body 2 oriented substantially vertically, the support head 4 at the upper end of the body 2, the lateral projection 22 of the knife holder 7 on the left, the pin 42 at the lower end of the body, the auxiliary cutting blade 40 on the left in the closed position and the member 44 for opening the blade 40 on the right.

The upper portion of the knife holder 7 comprises an upper free end 60, beyond which the cutting portion 9 of the knife 8 extends. The face of the end 60 is substantially perpendicular to the longitudinal axis X-X. The projection 22 extends from the face of the end 60 in the direction transverse to the longitudinal axis X-X of the body 2.

The projection 22 is arranged, at least in part, in the recess 3 of the body 2 and extends laterally leftwards beyond the body 2. Said projection comprises an upper bearing face 62 which is inclined in relation to the longitudinal axis X-X, laterally from the free end 60 towards the end of the body 2 opposite the head 4, moving away from the axis X-X. The angle of inclination α between the face 62 and the longitudinal axis X-X is between 45° and 90°, preferably 65°, such that the angle of inclination β between the faces 60 and 62 is between 135° and 180°, preferably 155°.

The projection 22 constitutes a gripping means which is rigidly connected to the knife holder 7 for manoeuvring it. This gripping means is arranged adjacent to the free end 60 of the knife holder 7. Depending on the grip of the operator, the inclined bearing face 62 of the projection 22 is easily accessible by the index finger or the thumb of the hand which holds the body 2. A concave region 64 of large radius is formed in the portion of the face 62 which permanently extends laterally beyond the body 2.

This arrangement improves the ergonomics of the grip of the index finger or thumb.

In addition, the concave region 64 of the bearing face 62 is particularly well adapted for receiving a cable 90 (Fig. 5a to 5c) to be engaged in the inner forms 16a and 16b in the shape of an upside down V of the support head 4.

This has the advantage of providing the operator with a tool which is practical to use.

When the longitudinal branches 23a and 23b of the knife holder 7 are assembled, the knife holder 7 comprises, in the main portion thereof and on the lateral face thereof opposite the projection 22, a blind hole 70 adapted to receive the upper hook 50 of the member 44 for opening the auxiliary cutting blade 40.

While the blade 40 is at rest in the body 2, the lower hook 52 directed towards the pin 42 presses, under the action of the spring 54, on a substantially planar face 80 arranged at the end articulated at 42 of the blade 40. This firstly prevents any untimely opening of the blade 40 and secondly keeps the upper hook 50 directed towards the blind hole 70 with sufficient spacing from the hole 70 to allow the sliding of the knife holder 7 along the longitudinal axis X-X.

As soon as the blade 40 is partially displaced in rotation from the rest position, the inner hook 52 acts on a cam surface 82 which is adjacent to the flat portion 80 and arranged at the end articulated at 42 of the blade 40.

The completely open position of the blade 40 (Fig. 4) is defined by the snap-locking of the inner hook 52 in a notch 84 also arranged at the end articulated at 42 of the blade 40. The blade is then locked.

The shape of the cam surface 82 and the depth of the notch 84 are such that, under the rocking effect of the opening member 44, the upper hook 50 is engaged with the blind hole 70 when the blade 40 is extracted, at least in part, from the body 2 in the direction of the arrow d in Fig. 4.

The knife holder 7 is thus prevented from sliding along the longitudinal axis X-X when the blade 40 is partly or completely extended from the body 2, and this provides safety for the operator.

Fig. 5a to 5c show the placement of a cable in the support head of the tool.

Before the placement of the cable, the body 2 being grasped with the whole hand, the operator adjusts the projection height of the knife 8 by actuating the knob 38 at the level of the windows 29a and 29b of the knife holder 7, between the thumb and the index finger of the hand holding the body 2 or between those of the other hand.

He then positions the cable 90 to be stripped on the free end of the inclined upper face 62 of the projection 22 while applying an increasing force F substantially perpendicular to the longitudinal axis X-X (Fig. 5a).

The cable 90 slides over the concave region 64, exerting on the knife holder 7 an increasing force F1 (Fig. 5b), of which the component F1x (Fig. 5b) along the longitudinal axis X-X becomes greater than the axial reaction R of the compression spring 32. The knife holder 7 is displaced downwards, moving away from the head 4 in the direction of the arrow d1 (Fig. 5b), while the cable 90 is in abutment against the outer form of the head 4 in a configuration where there is instantaneously equilibrium of the forces present (Fig. 5b).

By substantially increasing the force F acting on the cable 90, the operator exceeds the friction forces of the edge of the head 4 acting on the cable 90. The component F1x becomes so great in relation to the reaction of the spring 32 that the knife holder 7 is displaced downwards, moving even further away from the head 4. The distance between the head 4 and the knife holder 7 is then sufficient for the cable 90 to fit and be wedged in the inner forms 16a and 16b in the shape of an upside down V of the head 4. The operator momentarily releases the force F on the cable 90 until it is cancelled, which has the result that the knife holder 7 is displaced upwards, moving closer to the head 4 in the direction of the arrow d2 under the effect of the axial reaction R of the spring 32 (Fig. 5c).

Since the knife holder 7 is continuously biased upwards, the incision knife 8 sinks into the sheath 91 (Fig. 5c) of the cable 90 until the upside down V of the head 4 centres the cable in a suitable, stable position for the cutting operations.

In a known manner, the operator then performs the circular incision of the sheath 91, pushing the lower end of the body 2 leftwards in the direction of the arrow F2 in Fig. 5c. The knife 3 is oriented such that the sheath 91 is then cut exactly at the preset depth and an additional rotation of the tool through a complete turn provides the circular cut of the sheath end to be removed.

Then, by turning his hand a quarter of a turn, the operator again grasps the body 2 with his whole hand and pulls it perpendicularly to the plane of Fig. 5c. The knife 8 then performs a longitudinal incision of the sheath end to be removed.

It should be noted that the knife 8 is mounted in a rotatable and eccentric manner in the knife holder 7, and this allows the cutting portion 9 to be oriented automatically either circumferentially or axially in relation to the cable 90 in the direction of the force exerted on the body 2.

Fig. 6, 7a and 7b, and 8a to 8c show another aspect present disclosure. In Fig. 6 the incision sub-assembly 30 extends along a longitudinal axis X'-X' substantially parallel to the axis X-X.

The knife 8 comprises, in its main portion, an elongated cylindrical shaft 100 of outer diameter Φ1 (Fig. 8a). The cutting portion 9 on one hand and an end 101 opposite the cutting portion 9 on the other hand delimit the shaft 100. The end 101 is provided with a circular groove 102, the diameter Φ2 of which (Fig. 8a) at the base of the groove is smaller than that of Φ1.

The socket 34 comprises a generally cylindrical barrel 103 which extends along the axis X'X', delimited by a first face 104 directed towards the cutting portion 9 of the knife and a face 105 directed towards the clip 36. The socket 34 comprises two diametrically opposed flat portions 108 (only one is visible in Fig. 6) extending in mutually parallel planes which are parallel to the axis X'X'. The flat portions 108 interact with the recesses 28a and 28b by complementarity of shape and ensure the longitudinal sliding of the socket 34 in relation to the knife holder 7.

Since the thread 35 of the socket 34 corresponds to the tapping 39 of the knob 38, a rotary action on the knob 38 in relation to the axis X'-X' causes a translatory movement of the socket 34. The user can thus preset the height of the cutting portion 9 of the knife 8 which projects from the face 60 of the knife holder 7.

The socket 34 also comprises a recess 110 (Fig. 8a and 8b) arranged transverse to the axis X'X'. The recess 110 opens at the face 105 and the flat portions 108. It delimits a base 111 (Fig. 8c) and two longitudinal wings 112 and 114 (Fig. 6 and 8c) connected by an intermediate bar 116 (Fig. 8a to 8c). Said bar is arranged in the recess 110, perpendicular to the axis X'X', set back from the face 106 and remote from the base 111. The bar 116 is provided with a blind bore 118 (Fig. 8b) in the longitudinal axis X'-X' of the socket and on the side of the face 105.

The face 104 comprises a counterbore 120 (Fig. 8a) extended by an axial passage 121 (Fig. 8c) opening at the base 111 of the recess 110. The passage 121 receives the shaft 100 of the knife 8 in a rotatable manner.

In Fig. 8c, only the socket 34 is shown for the sake of clarity of the drawing. The bar 116 divides the recess 110 into two portions, namely a first space 122 between the base 111 and the bar 116, and a second space 124 which is open towards the face 105. A channel 125 extends perpendicularly to the axis X'-X' and receives the end 101 of the shaft 100 of the knife.

In Fig. 7a and 7b, the clip 36 is a part of relatively low thickness e which is folded in a U shape and, preferably, made of metal. It comprises two branches 130 and 132 connected to a central portion 134. The branches 130 and 132 are arranged in parallel planes and substantially perpendicular to the axis X'X'. The central part 134 is arranged in a plane substantially parallel to the axis X'X' and perpendicular to the planes of the branches 130 and 132.

The clip 36 is received in a sliding manner in the recess 110 in a direction perpendicular to the axis X'X'. The branch 130 is arranged in the first space 122 and comprises an opening 136 obtained by cutting (Fig. 7a). The branch 132 is arranged in the second space 124 and comprises a boss 138 oriented towards the inside of the U, that is to say the convex shape of the boss 138 is turned towards the branch 130 (Fig. 7b).

The opening 136 in the branch 130 shown in Fig. 7a extends along an axis Y-Y perpendicular to the axis X'X'. Said opening has an elongated shape in the form of a "key seat". It comprises, as shown from left to right in Fig. 7a, a first curved cut 140 through approximately 180° and of diameter Φ3. The cut 140 is connected to a straight cut 142 delimited by two straight lines 144 parallel to the axis Y-Y. The width of the cut 142 is equal to the diameter Φ3. A second curved cut 146 through approximately 270° and of diameter Φ4, which is larger than the diameter Φ3, extends the straight cut 142 towards the right.

In terms of dimensions, the diameter Φ3 is smaller than the diameter Φ1 and larger than the diameter Φ2, while the diameter Φ4 is larger than the diameter Φ1. In addition, the thickness e of the branch 130 is smaller than the width of the groove 102.

The end 101 of the shaft 100 of the incision knife is thus capable of passing through the second cut 146. When the groove 102 is engaged in the opening 136, the cuts 140 and 142 are adapted to slide in the groove 102 in a relative movement substantially perpendicular to the axis X'X', a displacement along the axis X'X' being limited to the play between the thickness e of the branch 130 and the width of the groove 102.

Fig. 8a shows the clip 36 in a stable position in which it is locked relative to the knife 8, which cannot be disassembled from the socket 34.

In this position the groove 102 is engaged in the cuts 140 and 142, as shown by dashed lines in Fig. 7a, and the boss 138 is engaged in the blind bore 118 by complementarity of shape (Fig. 8a).

The shells 20a and 20b of the knife holder 7 respectively comprise a transverse passage 150a and 150b (Fig. 8a and 8b) giving access to the clip from the outside when the shells are assembled. The passages 150a and 150b open into one another with a slight axial offset.

To obtain the position in which the knife 8 is locked in relation to the socket 34, the user firstly acts, from the outside, by turning the knob 38 so as to position the clip 36 along the longitudinal axis X'-X', facing the passages 150a and 150b, the cutting portion of the knife 8 being virtually withdrawn inside the knife holder 7.

The user then acts on the free end of the branch 132 through the passage 150a formed in the shell 20a and arranged perpendicular to the axis X'-X' by exerting a force in the direction of the arrow F3 in Fig. 8a. The groove 102 is then engaged in the first curved cut 140 and in the small straight cut 142, and this has the effect of preventing any uncoupling between the knife 8 and the clip 36 in an axial movement along the axis X'-X'.

Depending on the intensity of use of the tool, the cutting portion 9 of the knife 8 is subjected to wear over time.

To change the knife 8, the user again acts, from the outside, by turning the knob 38 so as to position the clip 36 longitudinally such that it faces the passages 150a and 150b.

He then urges the clip 36 from the locked position (Fig. 8a) towards an unlocked position (Fig. 8b) by exerting a force on the central portion 134 in the direction of the arrow F4 in Fig. 8b through the passage 150b formed in the shell 20b and arranged perpendicular to the axis X'-X'.

When the clip 36 is in the unlocked position, the boss 138 is disengaged from the blind bore 118 and the groove 102 is engaged in the curved cut 146 of large diameter, and this has the effect of allowing the uncoupling between the knife 8 and the clip 36 in an axial movement along the axis X'-X'.

It should be noted that, in the locked position, as in the unlocked position, the clip 36 is arranged entirely in the recess 110, without projecting in relation to the two flat portions 108.

The user displaces the knife holder 7 against the spring 32 and inverts the tool 1 by directing the support head 4 downwards in order to extract the knife 8 from the knife holder 7 under the effect of gravity.

A new incision knife 8 is mounted by way of the reverse operations.

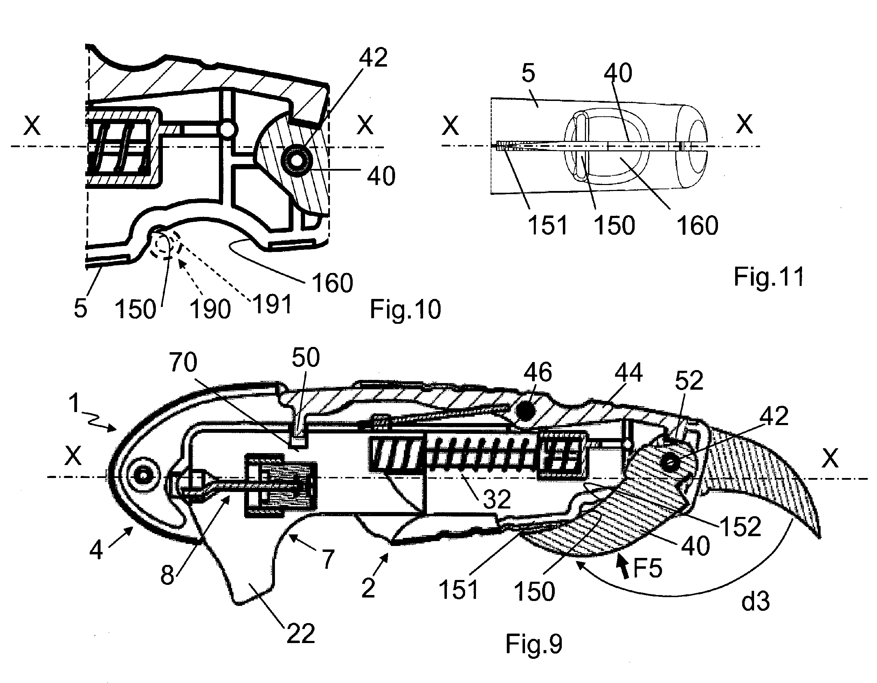

Fig. 9 to 11 show a third aspect of the present disclosure.

The tool 1 has an additional stripping means adapted to a conductor of small diameter, such as an electric wire.

For this purpose, the casing 5 forming a handle comprises a channel 150 arranged perpendicular to the axis X-X of the body, the transverse profile of which channel, in the form of a partial circle, is adapted to receive a conductor 190 provided with a sheath 191 and shown by dashed lines in Fig. 10. The conductor has a small diameter compared with the diameter of a cable.

The channel 150 is arranged on the outer envelope of the casing 5, close to the pin 42 of the retractable cutting blade 40, on either side of a slot 151 in the body 2, in which slot the blade 40 is positioned when it is retracted inside the body.

The arrangement of the channel 150 is such that the cutting or sharp portion 152 (Fig. 9) of the blade 40 interferes in the profile of the channel 150 when the blade 40 is displaced in rotation between a position in which it is extended at least in part and a position in which it is retracted inside said body at least in part (Fig. 9). The cutting edge 152 faces the body 2 and the user cannot position a finger opposite the cutting edge. The safety of the user is thus improved.

In an advantageous manner the outer envelope of the casing 5 also comprises a notch 160 which also extends perpendicular to the axis X-X on either side of the slot 151. The notch 160 is also arranged close to the pin 42 and its concave shape is provided with the channel 150.

The operator uses the notch 160 to grasp the blade 40 between thumb and index finger when said blade is in a retracted position inside the body 2. He can thus easily extract the blade 40 from the casing 5.

To strip the conductor 190, the operator extracts the blade 40 from the body 2, at least in part, allowing full access to the channel, for example in a completely extended position.

He then places the conductor 190 to be stripped in the channel 150 and positions the cutting edge 152 of the blade 40 in contact with the conductor by rotating the blade 40 in relation to the pin 42 in the direction of the arrow d3 in Fig. 9.

The user keeps the conductor 190 clamped between the blade 40 and the channel 150 by exerting a pushing force in the direction of the arrow F5 in Fig. 9 on the back of the blade 40 by means of his thumb, while applying a reaction force by means of his index finger on the face of the casing 5 which is opposite the blade 40.

He then causes one of the tool and the conductor to rotate in relation to the other along the axis of the channel 150 through an angle of approximately 180° in one direction and then in the other.

The sheath 191 of the conductor 190 is cut sufficiently over its circumference to expose the metal core of the conductor over the desired length.

The user thus benefits from a simple and effective arrangement for stripping a conductor of small diameter. This arrangement is applicable to a stripping tool at least provided with a body and a pivoting and retractable cutting blade, such as an electrician's knife.

Owing to the invention, the user can work effectively and quickly to strip a cable. He performs his tasks ergonomically and safely. In addition, he can change the incision knife rapidly without disassembling the tool completely. The tool also makes it possible to strip a conductor easily by means of a retractable cutting blade. Finally, the tool is simple, compact and economical to produce.

## Claims

1. Manual cable stripping tool (1), the tool being of the type comprising an elongated body (2) which extends along a longitudinal axis X-X and is provided with a recess (3) delimiting a cable support head (4); a knife holder (7) which is received in a sliding manner in relation to the body (2) substantially along the longitudinal axis X-X and the free end (60) of which is arranged in the recess (3), facing the support head (4); a cable sheath incision knife (8) which is supported by the knife holder (7) and the cutting portion (9) of which is capable of extending beyond the free end (60) of the knife holder (7); a biasing means (32) which acts on the knife holder (7) to displace it towards the support head (4); the knife holder (7) being movable between an advanced position in which the incision knife (8) is moved closer to the support head (4) under the action of the biasing means (32) and a retracted position in which the incision knife (8) is moved away from the support head (4) against the action of the biasing means (32), **characterised in that** the manual cable stripping tool (1) has a gripping means (22) which is rigidly connected to the knife holder (7) for manoeuvring it, the gripping means (22) being arranged adjacent to the free end (60) of the knife holder (7) and comprising a bearing face (62) adapted to receive the cable to be engaged in the support head (4).

2. Tool according to claim 1, **characterised in that** the bearing face (62) is oriented in relation to the longitudinal axis X-X such that a force F applied to the cable in a direction substantially transverse to the sliding direction of the knife holder (7) acts on the knife holder (7) with an axial force component F1x capable of displacing the knife holder (7) from its advanced position towards its retracted position against the action R of the biasing means (32).

3. Tool according to either claim 1 or claim 2, **characterised in that** the gripping means (22) is arranged so as to project laterally, at least in part, from the support head (4), and **in that** the bearing face (62) is inclined in relation to the longitudinal axis X-X of the body (2), laterally from the end (60) of the knife holder (7) towards the end of the body (2) opposite the head (4), moving away from the longitudinal axis X-X.

4. Tool according to claim 3, **characterised in that** the inclination is between 45° and 90°, preferably 65°.

5. Tool according to any of claims 1 to 4, **characterised in that** the bearing face (62) of the cable comprises a concave region (64) for receiving the cable.

6. Tool according to any of claims 1 to 5, **characterised in that** it further comprises a retractable cutting blade (40), pivotally articulated to the casing (5) of the body (2) at the opposite end from the support head (4), the blade (40) being movable between a rest position in which it is closed, retracted inside the body (2), and a working position in which it is open, completely extended from the body (2), and **in that** the casing (5) of the body (2) further comprises a channel (150) which is transverse in relation to the axis X-X and intended to receive an electrical conductor, the cutting portion (152) of the blade (40) interfering in the profile of the channel (150) in order to strip the conductor when the blade (40) is in a virtually closed position.

7. Tool according to claim 6, **characterised in that** a member (44) for opening the blade (40) prevents the knife holder (7) from sliding from the advanced position towards the retracted position when the blade (40) is extracted at least in part from the body (2).

8. Tool according to any of claims 1 to 7, **characterised in that** the knife holder (7) further receives a socket (34) supporting the incision knife (8), and a clip (36) arranged so as to be movable inside the socket (34), and **in that** the clip (36) is provided with a locking/unlocking opening (136) intended to interact with a groove (102) of the end (101) of the knife (8) opposite the cutting portion (9) of the knife (8).

9. Tool according to claim 8, **characterised in that** the knife holder (7) receives the socket (34) in a sliding manner substantially along the longitudinal axis X-X.

10. Tool according to claim 9, **characterised in that** the knife holder (7) receives a knob (38) such that said knob can rotate relative to the knife holder (7), which knob is provided with an internal tapping (39) which acts on an external thread (35) of the socket (34) in order to displace it in a sliding manner.

## Patentansprüche

1. Manuell bedienbares Abmantelwerkzeug für Kabel (1), wobei das Werkzeug von dem Typ ist, der Folgendes umfasst: einen langgestreckten Körper (2), welcher sich entlang einer Längsachse X-X erstreckt und mit einer Aussparung (3) ausgestattet ist, die einen Haltekopf für Kabel (4) begrenzt; einen Messerhalter (7), welcher in Bezug auf den Körper (2) im Wesentlichen entlang der Längsachse X-X gleitend aufgenommen ist und dessen freies Ende (60) in der Aussparung (3) ausgeführt ist und der Halterung (4) gegenüberliegt; ein Schneidmesser zum Auftrennen des Kabelmantels (8), welches durch den Messerhalter (7) unterstützt wird, und dessen Schnittbereich (9) sich über das freie Ende (60) des Messerhalters (7) hinaus erstrecken kann; ein Spannmittel (32), welches auf den Messerhalter (7) wirkt, um diesen in Richtung auf den Haltekopf (4) zu verschieben; den Messerhalter (7), welcher bewegbar ist zwischen einer vorgeschobenen Position, in welcher das Schneidmesser (8) unter der Einwirkung des Spannmittels (32) näher an den Haltekopf (4) bewegt wird, und einer eingeschobenen Position, in welcher das Schneidmesser (8) gegen die Einwirkung des Spannmittels (32) von dem Haltekopf (4) wegbewegt wird, **dadurch gekennzeichnet, dass** das manuell bedienbare Abmantelwerkzeug für Kabel (1) ein Griffteil (22) aufweist, welches starr mit dem Messerhalter (7) verbunden ist, um diesen zu manövrieren, wobei das Griffteil (22) in der Nähe des freien Endes (60) des Messerhalters (7) angeordnet ist und eine Auflagefläche (62) umfasst, um das Kabel, das in die Halterung (4) eingeführt werden soll, aufzunehmen.

2. Werkzeug nach Anspruch 1, **dadurch gekennzeichnet, dass** die Auflagefläche (62) in Bezug auf die Längsachse X-X so ausgerichtet ist, dass eine Kraft F, die auf das Kabel in einer im Wesentlichen quer zu der Gleitrichtung des Messerhalters (7) verlaufenden Richtung ausgeübt wird, auf den Messerhalter (7) mit einer Achsialkraftkomponente F1x einwirkt, welche dazu in der Lage ist, den Messerhalter (7) aus seiner vorgeschobenen Position in Richtung auf seine eingeschobene Position gegen die Einwirkung R des Spannmittels (32) zu verschieben.

3. Werkzeug nach Anspruch 1 oder 2, **dadurch gekennzeichnet, dass** das Griffteil (22) so angeordnet ist, dass es seitlich, zumindest zu einem Teil, aus dem Haltekopf (4) herausragt, und dass die Auflagefläche (62) in Bezug auf die Längsachse X-X des Körpers (2) seitlich aus dem Ende (60) des Messerhalters (7) in Richtung auf das Ende des Körpers (2) gegenüber dem Kopf (4) geneigt ist und auf diese Weise von der Längsachse X-X weggezogen ist.

4. Werkzeug nach Anspruch 3, **dadurch gekennzeichnet, dass** die Neigung zwischen 45° und 90°, vorzugsweise 65°, beträgt.

5. Werkzeug nach einem der Ansprüche 1 bis 4, **dadurch gekennzeichnet, dass** die Auflagefläche (62) für das Kabel einen konkaven Bereich (64) zur Aufnahme des Kabels umfasst.

6. Werkzeug nach einem der Ansprüche 1 bis 5, **dadurch gekennzeichnet, dass** es ferner eine einschiebbare Schneideklinge (40) umfasst, die schwenkbar zu dem Gehäuse (5) des Körpers (2) an dem gegenüberliegenden Ende des Haltekopfes (4) gelagert ist, wobei die Klinge (40) zwischen einer Ruheposition, in welcher sie geschlossen und in den Köper (2) zurückgeschoben ist, und einer Arbeitsposition, in welcher sie offen ist und sich vollständig aus dem Körper (2) erstreckt, bewegbar ist, und dass das Gehäuse (5) des Körpers (2) ferner einen Kanal (150) umfasst, welcher quer in Bezug auf die Achse X-X verläuft und dazu gedacht ist, einen elektrischen Leiter aufzunehmen, wobei der Schnittbereich (152) der Klinge (40) in das Profil des Kanals (150) eingreift, um den Leiter abzumanteln, wenn sich die Klinge (40) in einer praktisch geschlossenen Position befindet.

7. Werkzeug nach Anspruch 6, **dadurch gekennzeichnet, dass** ein Glied (44) zum Öffnen der Klinge (40) den Messerhalter (7) daran hindert, aus der vorgeschobenen Position in Richtung auf die eingeschobene Position zu gleiten, wenn die Klinge (40) sich zumindest zum Teil aus dem Körper (2) heraus erstreckt.

8. Werkzeug nach einem der Ansprüche 1 bis 7, **dadurch gekennzeichnet, dass** der Messerhalter (7) ferner einen Einsatz (34) zur Unterstützung des Schneidmessers (8) aufnimmt und ein Klemmelement (36), das so angeordnet ist, dass es in dem Einsatz (34) beweglich ist, und dass das Klemmelement (36) mit einer verriegelbaren/entriegelbaren Öffnung (136) ausgestattet ist, welche dazu gedacht ist, mit einer Nut (102) von dem Ende (101) des Messers (8), die gegenüber dem Schnittbereich (9) des Messers (8) liegt, zu interagieren.

9. Werkzeug nach Anspruch 8, **dadurch gekennzeichnet**, das der Messerhalter (7) den Einsatz (34) im Wesentlichen entlang der Längsachse X-X gleitend aufnimmt.

10. Werkzeug nach Anspruch 9, **dadurch gekennzeichnet, dass** der Messerhalter (7) einen Knopf (38) aufnimmt, sodass sich der Knopf in Bezug auf den Messerhalter (7) drehen kann, wobei der Knopf mit Innenrillen (39) ausgestattet ist, welche als ein Außengewinde (35) des Einsatzes (34) fungieren, um diesen gleitend zu verschieben.

## Revendications

1. Outil manuel de dénudage de câble (1), l'outil étant du type comprenant un corps allongé (2) qui s'étend le long d'un axe longitudinal X-X et est pourvu d'une cavité (3) délimitant une tête de support de câble (4) ; un porte-couteau (7) qui est reçu à coulissement par rapport au corps (2) sensiblement le long de l'axe longitudinal X-X et dont l'extrémité libre (60) est aménagée dans la cavité (3), en regard de la tête de support (4) ; un couteau d'incision de gaine de câble (8) qui est supporté par le porte-couteau (7) et dont la partie de coupe (9) est à même de s'étendre au-delà de l'extrémité libre (60) du porte-couteau (7) ; un moyen de sollicitation (32) qui agit sur le porte-couteau (7) pour le déplacer vers la tête de support (4) ; le porte-couteau (7) étant mobile entre une position avancée, dans laquelle le couteau d'incision (8) est déplacé plus près de la tête de support (4) sous l'action du moyen de sollicitation (32), et une position rétractée, dans laquelle le couteau d'incision (8) est écarté de la tête de support (4) à l'encontre de l'action du moyen de sollicitation (32), **caractérisé en ce que** l'outil manuel de dénudage de câble (1) a un moyen de saisie (22) qui est raccordé de manière rigide au porte-couteau (7) pour le manoeuvrer, le moyen de saisie (22) étant aménagé adjacent à l'extrémité libre (60) du porte-couteau (7) et comprenant une face d'appui (62) qui est à même de recevoir le câble pour l'engager dans la tête de support (4).

2. Outil selon la revendication 1, **caractérisé en ce que** la face d'appui (62) est orientée par rapport à l'axe longitudinal X-X de sorte qu'une force F appliquée au câble dans une direction sensiblement transversale à la direction de coulissement du porte-couteau (7) agisse sur le porte-couteau (7) avec une composante de force axiale F1x capable de déplacer le porte-couteau (7) de sa position avancée vers sa position rétractée à l'encontre de l'action R du moyen de sollicitation (32).

3. Outil selon l'une quelconque de la revendication 1 ou de la revendication 2, **caractérisé en ce que** le moyen de saisie (22) est aménagé de manière à faire saillie latéralement, au moins en partie, de la tête de support (4) et **en ce que** la face d'appui (62) est inclinée par rapport à l'axe longitudinal X-X du corps (2), latéralement par rapport à l'extrémité (60) du porte-couteau (7) vers l'extrémité du corps (2) opposée à la tête (4), en s'écartant de l'axe longitudinal X-X.

4. Outil selon la revendication 3, **caractérisé en ce que** l'inclinaison se situe entre 45° et 90°, de préférence de 65°.

5. Outil selon l'une quelconque des revendications 1 à 4, **caractérisé en ce que** la face d'appui (62) du câble comprend une région concave (64) pour recevoir le câble.

6. Outil selon l'une quelconque des revendications 1 à 5, **caractérisé en ce qu'**il comprend en outre une lame de coupe rétractable (40) articulée à pivotement sur le boîtier (5) du corps (2) à l'extrémité opposée à la tête de support (4), la lame (40) étant mobile entre une position de repos, dans laquelle elle est fermée, rétractée à l'intérieur du corps (2), et une position de travail, dans laquelle elle est ouverte complètement en extension depuis le corps (2), et **en ce que** le boîtier (5) du corps (2) comprend en outre un canal (150) qui est transversal par rapport à l'axe X-X et est destiné à recevoir un conducteur électrique, la partie de coupe (152) de la lame (40) interférant dans le profil du canal (150) de manière à dénuder le conducteur lorsque la lame (40) est en position virtuellement fermée.

7. Outil selon la revendication 6, **caractérisé en ce qu'**un élément (44) permettant d'ouvrir la lame (40) empêche le porte-couteau (7) de glisser de la position avancée vers la position rétractée lorsque la lame (40) est extraite au moins en partie du corps (2).

8. Outil selon l'une quelconque des revendications 1 à 7, **caractérisé en ce que** le porte-couteau (7) reçoit en outre une douille (34) supportant le couteau d'incision (8) et une pince (36) aménagée de manière à être mobile à l'intérieur de la douille (34), et **en ce que** la pince (36) est pourvue d'une ouverture de verrouillage/- déverrouillage (136) destinée à interagir avec une rainure (102) de l'extrémité (101) du couteau (8) opposée à la partie de coupe (9) du couteau (8).

9. Outil selon la revendication 8, **caractérisé en ce que** le porte-couteau (7) reçoit la douille (34) à coulissement sensiblement le long de l'axe longitudinal X-X.

10. Outil selon la revendication 9, **caractérisé en ce que** le porte-couteau (7) reçoit un bouton (38) tel que ledit bouton puisse tourner par rapport au porte-couteau (7), lequel bouton est pourvu d'un filet interne (39) qui agit sur un filet externe (35) de la douille (34) pour la déplacer à coulissement.
